## Europäisches Patentamt
## European Patent Office
## Office européen des brevets

Veröffentlichungsnummer: **0 300 435**
**A2**

# EUROPÄISCHE PATENTANMELDUNG

Anmeldenummer: **88111627.1**

Int. Cl.⁴ **B29C 43/22 , B29C 59/04**

Anmeldetag: **19.07.88**

Priorität: **23.07.87 DE 3724458**

Veröffentlichungstag der Anmeldung:
**25.01.89 Patentblatt 89/04**

Benannte Vertragsstaaten:
**AT DE ES FR GB IT**

Anmelder: **Karl Dörr Kartonagen-Hinterkappen**
**Am Naturheil 2**
**D-6780 Pirmasens(DE)**

Erfinder: **Dörr, Hans-Joachim**
**Am Hasenweg 3a**
**D-6780 Pirmasens(DE)**
Erfinder: **Dörr, Karl**
**Am Hasenweg 3a**
**D-6780 Pirmasens(DE)**

Vertreter: **Schmidt-Evers, Jürgen, Dipl.-Ing. et al**
**Patentanwälte Dipl.-Ing. H. Mitscherlich**
**Dipl.-Ing. K. Gunschmann Dipl.-Ing.**
**Dr.rer.nat. W. Körber Dipl.-Ing. J.**
**Schmidt-Evers Dipl.-Ing. W. Melzer**
**Steinsdorfstrasse 10**
**D-8000 München 22(DE)**

**Verfahren zum Herstellen eines flachen Formteils aus einem thermoplastischen Kunststoff und Vorrichtung zur Durchführung des Verfahrens.**

Ein Verfahren zur Herstellung eines flachen Formteils aus einem thermoplastischen Kunststoff, das Bereiche mit unterschiedlichen Dicken aufweist, ist so weiterzubilden, daß eini billige Herstellung möglich ist. Dies wird dadurch erreicht, daß der Kunststoff auf eine Temperatur erhitzt wird, bei der er eine im wesentlichen viskose bzw. breiige Konsistenz aufweist, und auf ein umlaufendes Transportband (4) in Form einer Schicht (9) kontinuierlich aufgegeben wird, daß an einer Prägestation (27) von oben der Form der Dickenunterschiede entsprechende Prägemittel (15) in die Schicht (9) eingedrückt werden, und daß nach einer Abkühlung der geprägten Schicht (9) die geprägten Abschnitte (Formteile 1) von der Schicht (9) getrennt werden.

FIG. 3

EP 0 300 435 A2

# Verfahren zum Herstellen eines flachen Formteils aus einem thermoplastischen Kunststoff und Vorrichtung zur Durchführung des Verfahrens

Die Erfindung bezieht sich auf ein Verfahren und auf eine Vorrichtung zur Durchführung des Verfahrens nach dem Oberbegriff des Anspruches 1 bzw 12.

Insbesondere bei der Herstellung von Gebrauchsgütern gibt es eine Vielzahl von Anwendungsfällen, bei denen flache Kunststoffteile durch breitseitige Anlage z.B. der Verstärkung eines das Kunststoffteil tragenden Trägers dienen, wobei das Kunststoffteil unterschiedliche Dickenbereiche aufweist und durch Kleben am Träger befestigt ist. Ein bedeutendes Beispiel eines solchen Verwendungsfalles ist die Schuhfertigung, bei der Vorder- oder Hinterkappen als flache Formteile in die Leisten des Schuhs eingearbeitet werden. Bei Vorder- oder Hinterkappen liegen unterschiedliche Dickenbereich in Form von keilförmig auslaufende Kantenbereiche vor, die eine gute Paßform ergeben.

Es ist bekannt, für den vorgenannten Zweck unter Hitzeeinwirkung in einem durch die Verarbeitungsmöglichkeit bedingten Temperaturbereich nicht klebendes thermoplastisches Material zu verwenden, das in einer Rolle oder in Plattenform zur Verfügung steht und auf beiden Seiten mit einer Klebeschicht versehen ist. Dieses Material muß nach dem Zuschneiden der Umfangsform durch für diesen Zweck speziell vorgesehenen Bearbeitungsmaschinen so bearbeitet werden, daß die Kantenbereiche keilförmig, d.h. spitz auslaufen zwecks Erzielung der vorbeschriebenen guten Paßform bzw. Vermeidung von Stoßkanten oder zur Erzielung einer bestimmten Formfläche. Bei einem Material, das schon bei seiner Herstellung mit der oder den Klebeschichten versehen ist, wird die Klebeschicht im Bereich der keilförmig auslaufenden Kantenbereiche zerstört, wodurch die Haftung des so gebildeten Formteils beeinträchtigt wird. In dem Fall, in dem eine vollfächige Klebeschicht erforderlich ist, muß die Klebeschicht nach dem Bearbeiten der keilförmig auslaufenden Kantenbereiche aufgetragen werden.

Bei Formteilen der vorliegenden Art ist die Anbringung der unterschiedlichen Dickenbereiche mit einem erheblichen Aufwand verbunden. Zum einen ist das Bearbeitungsverfahren selbst verhältnismäßig schwierig, und zum anderen ist damit ein erheblicher Materialverbrauch verbunden, der zu entsorgen ist.

Der Erfindung liegt die Aufgabe zugrunde, ein Verfahren bzw. eine Vorrichtung zu finden, mit der die Formteile billiger gestaltet werden können.

Diese Aufgabe wird durch die kennzeichnenden Merkmale der Ansprüche 1 bzw. 12 gelöst.

Beim erfindungsgemäßen Verfahren erfolgt die Herstellung der unterschiedlichen Dickenbereiche gleichzeitig bei der Herstellung des Ausgangsmaterials, so daß eine Nachbearbeitung zur Herstellung der unterschiedlichen Dickenbereiche entfällt. Schon hierdurch ist eine wesentliche Vereinfachung und Verbilligung der Herstellung erreichbar. Außerdem erfolgt die Herstellung der unterschiedlichen Dickenbereiche durch Prägen, wodurch erhebliche Materialverluste eingespart werden. Ein weiterer Vorteil des erfindungsgemäßen Verfahrens besteht darin, daß die Herstellung kontinuierlich erfolgt, wodurch eine rationelle Fertigung möglich ist.

Die Erfindung geht von der Erkenntnis aus, daß sich der thermoplastische Kunststoff bei einer viskosen bzw. breiigen Konsistenz (erhitzt) prägen läßt. Bei dem erfindungsgemäßen Verfahren wird beim kontinuierlichen Vorlauf der Schicht zunächst die Prägung an der Schicht angebracht und danach der die Prägung enthaltende Abschnitt (Formteil) von der Schicht getrennt. Dabei können bei entsprechender Bemessung der Breite der Schicht mehrere Formteile in Reihen gleichzeitig hergestellt werden, was zu einer rationellen Fertigung ebenfalls beiträgt.

Beim Prägen von thermoplastischem Kunststoff im viskosen bzw. breiigen Zustand besteht eine von der Zusammensetzung bzw. Eigenschaft des Kunststoffs abhängige Schwierigkeit darin, daß aufgrund von Klebewirkung die Entformung des Prägeelements schwierig ist, weil beim Entformen aufgrund von Anhangskräften die geprägte Form verformt bzw. zerstört werden könnte. Voraussetzung für das Nichteintreten dieser Schwierigkeit ist ein Kunststoff, der im viskosen bzw. breiigen Zustand trotz seiner Viskosität verhältnismäßig formstabil ist, also nicht verfließt. Eine zweite Voraussetzung ist das Nichteintreten einer Klebewirkung zwischen dem Kunststoff und dem Prägeelement. Diese Voraussetzung läßt sich durch eine entsprechende Materialwahl sowohl hinsichtlich des Kunststoffs als auch hinsichtlich des Prägeelementes vorgeben. Sofern jedoch ein Kunststoff vorliegt, bei dem im viskosen bzw. breiigen Zustand ein Verkleben mit dem Prägelement nicht auszuschließen ist, ergeben sich Entformungsschwierigkeiten, die durch die Verfahrensschritte nach den Ansprüchen 2 und oder 3 überwunden werden. Gemäß Anspruch 2 wird das Prägeelement mit der Durchlaufgeschwindigkeit der Schicht vorbewegt, wobei eine sich auf dieser Bewegungsstrecke einstellende Abkühlung, die durch eine aktive Kühlstrecke gemäß Anspruch 3 forciert werden kann, die Klebewirkung zwischen dem Kunststoff und dem Prägeelement zumindest soweit verringert, daß das Prägeelement aus dem Kunststoff entfernt werden kann ohne daß aufgrund dessen Verfestigung mit einer Entformung der Prägung zu rechnen ist.

Beim Verfahrensschritt gemäß Anspruch 4 werden der Kunststoff und das Prägeelement durch ein Trennmittel in Form eines umlaufenden Bandes getrennt, das plastisch oder elastisch der Prägeformgebung zu folgen vermag. Das Prägeelement kommt somit mit dem Kunststoff nicht in Kontakt. Das Prägehilfsband kann dann vom Kunststoff abheben, wenn dieser verfestigt und somit unempfindlicher gegen Verformung ist. Der Verfahrensschritt nach Anspruch 4 ermöglicht auch einen anderen Vorteil, nämlich Formstabilität der Prägung durch das umlaufende Prägehilfsband, das aufgrund seiner elastischen oder plastischen Eigenschaft an der durch das Prägen mittels Matrizen durch das Prägehilfsband hindurch an der Formgebung teilnimmt und mit den Ausformungen - (insbesondere dann, wenn es aus einem dickeren Bandmaterial besteht, die Formstabilität des Kunststoffs gewährleistet und dabei solange mit dem Kunststoff in Kontakt bleiben kann, bis aufgrund von Abkühlung eine Trennung zwischen dem Prägehilfsband und dem Kunststoff erfolgen kann, ohne daß Verformungen der Prägung eintreten.

Für die vorbeschrienen Maßnahmen eignet sich insbesondere ein Prägehilfsband aus einem Material, das mit dem Kunststoff nicht oder nur wenig verklebt, wie Silikon oder Teflon.

Das Prägen der unterschiedlichen Dickenbreiche mit Hilfe des Prägehilfsbandes gemäß Anspruch 4 führt auch zu dem Vorteil, daß die Matrize unmittelbar nach dem erfolgten Prägevorgang, d.h. unmittelbar nach dem Eindringen in die Schicht wieder entfernt werden kann. Dies ist deshalb vorteilhaft, weil angeschichts des kontinuierlichen Durchlaufs die Anzahl der Prägeelemente wesentlich verringert werden kann, da die Matrize intermittierend in die Schicht eingedrückt werden kann.

Das erfindungsgemäße Verfahren ermöglicht somit den Einsatz von intermittierenden hoch- und herunterbeweglichen Prägestempeln oder eine Prägewalze, die in Anpassung an die Durchlaufgeschwindigkeit angetrieben werden.

Durch das Prägen können insbesondere bei einer konvexen Prägung oder bei einer Prägung in Form von keilförmig oder spitz auslaufenden Kantenbereichen eine solche Schwächung am Umfang des zu bildenden Formteils erreicht werden, daß das Formteil in einfacher Weise durch Überwindung des aufgrund der Schwächung noch vorhandenen Zusammenhanges zwischen dem Formteil und der Schicht, z.B. durch Hindurchstoßen, getrennt werden. Durch Stanzen gemäß Anspruch 6 läßt sich hierbei ein störungsfreier Trennvorgang verwirklichen, wobei gleichzeitig ein sauberer Umfang des Formteils geschaffen wird.

Das Beleimen des Formteils kann in vorteilhafterweise schon dann erfolgen, wenn der Kunststoff abgekühlt ist, wobei jedoch darauf zu achten ist, daß der Klebstoff nur auf die Formteile aufgetragen wird, die sich in dieser Position noch innerhalb der Schicht befinden. Der Klebstoff kann jedoch auch nach dem Ausstanzen auf die Formteile aufgetragen werden (Anspruch 7).

Für ein erfindungsgemäßes Formteil und für das erfindungsgemäße Verfahren eignet sich insbesondere ein Äthylenvenylacetat-Copolymeren, das auf dem Markt unter dem Namen ÄVA bekannt ist.

Das erfindungsgemäße Verfahren ermöglicht auch die Verwendung eines heißklebenden thermoplastischen Kunststoffs. Dies ist deshalb von besonderer Bedeutung, weil das Formteil aufgrund selbstklebender Wirkung nachträglich nicht mit einer Klebeschicht versehen zu werden braucht. Hierin ist ein ganz bedeutender Herstellungsvorteil zu sehen, der die Herstellung wesentlich vereinfacht und verbilligt. Bei der Verwendung von solchem heißklebendem Kunststoff, der auch durch Materialzusätze gemäß Anspruch 11 geschaffen werden kann, lassen sich insbesondere durch die Verfahrensschritte nach den Ansprüchen 2,3 und/oder 4 die Prägung in der Schicht trotz der klebenden Wirkung kontinuierlich verwirklichen.

In beiden Fällen, nämlich bei der Verwendung von nicht heißklebendem als auch von heißklebendem Kunststoff läßt sich beim erfindungsgemäßen Verfahren der Abfall wieder verwenden, wozu die Reste der Schicht, die je nach Anordnung der Formteile einen durchgehenden Zusammenhang bilden können, nach der Trennung von den Formteilen alsdann gesammelt und auch gestückelt der Wiederverwertung zugeführt werden kann.

Die erfindungsgemäße Vorrichtung gemäß Anspruch 12 ermöglicht eine einfache Durchführung des Verfahrens, und sie umfaßt auch einfache und funktionsfähige Bauteile, die sich einfach und preiswert herstellen lassen. Zu weiteren einzelnen Vorteilen der erfindungsgemäßen Vorrichtung wird auf die Vorteilsbeschreibung des Verfahrens verwiesen, weil entsprechende Vorteil auch schon bei der Beschreibung des Verfahrens genannt worden sind.

Die Erfindung bezieht sich auch auf ein Formteil, das sich nach dem erfindungsgemäßen Verfahren herstellen läßt und sich von bekannten Formteilen dadurch unterscheidet, daß es ausschließlich aus heißklebendem Kunststoff besteht und deshalb nicht nur einfach und preiswert hergestellt werden kann, sondern aufgrund seiner heißklebenden Eigenschaft vorteilhaft an seinem Träger, wie z.B. als Vorder- oder Hinterkappe an den Leisten eines Schuhs angebracht werden kann. Hierzu bedarf es der Anordnung bzw. Halterung des Formteils am Träger, einer Wärmezufuhr um den Kunststoff zwecks Klebung zu aktivieren und einer gewissen Druckausübung, um eine möglichst vollflächige Klebung mit dem Träger herbeizuführen.

Nachfolgend wird die Erfindung anhand von in vereinfachten Zeichnungen dargestellten Ausführungsbeispielen näher erläutert.

Es zeigt:

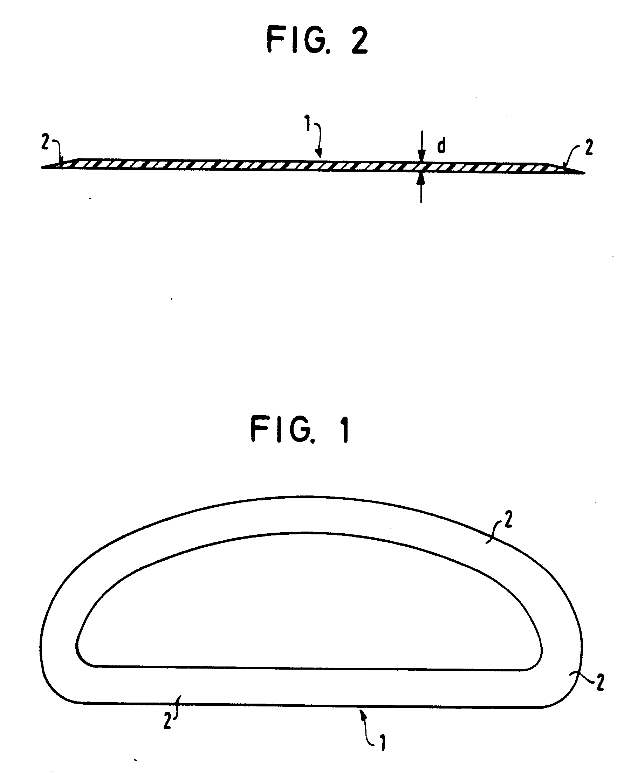

Figur 1 ein erfindungsgemäß ausgestaltetes Formteil aus flachem thermoplastischem Kunststoff in der Draufsicht;

Figur 2 das Formteil im Schnitt;

Figur 3 eine erfindungsgemäße ausgestaltete Vorrichtung in der Seitenansicht zur Herstellung des Formteils;

Figur 4 die Anordnung mehrerer gleichzeitig hergestellter Formteile in einer Materialschicht;

Figur 5 die in Figur 3 mit "X" gekennzeichnete Einzelheit in vergrößerter Darstellung;

Figur 6 die Einzelheit "X" in der Seitenansicht von links.

Bei dem allgemein mit 1 bezeichneten Formteil handelt es sich um eine Hinterkappe für Schuhe aus heißklebendem thermoplastischem Kunststoff wie Äthylenvenylacetat (EVA) mit einem Anteil von Kunzharz zwecks Verbesserung der Eigenschaft heißklebend. Der Anteil von EVA kann ca. 80% und der von Kunstharz etwa 20% betragen. Mit einer solchen Mischung wurden bei Versuchen gute Ergebnisse erzielt.

Das Formteil besteht aus Flachmaterial mit einer Dicke d von etwa 1 bis 2mm wobei die jeweils erforderliche Dicke sich nach der Art des Schuhs richtet. In der Draufsicht besitzt das Formteil 1 in etwa die Form eines abgerundeten Kreisabschnitts. Der mit 2 bezeichnete, sich über den gesamten Umfang erstreckende Kantenbereich läuft keilförmig, d.h. zum Umfang hin spitz aus, um eine gute Paßform der Hinterkappe zu erreichen. Das Formteil 1 stellt ein Zwischenprodukt dar, und wird zwecks Verstärkung der Schuhleisten im Fersenbereich zwischen dem Außenleder und einem Innenfutter angeordnet und heißverklebt durch Wärme, die zugeführt wird, wobei durch eine gezielte Druckausübung eine möglichst ganzflächige Verklebung erreicht werden kann. Einer Beleimung bzw. Beschichtung der Breitseiten des Formteils 1 mit Kleber bedarf es bei einer bevorzugten Ausführungsform nicht, weil dieser aus heißklebendem Kunststoff besteht. Der vorbezeichnete Kunststoff ist bei einer Temperatur von etwa 90° C heißklebend.

Die wesentlichen Bauteile der allgemein mit 3 bezeichneten Vorrichtung zur Herstellung des Formteiles sind ein Transportband 4, das um zwei in einem bestimmten Abstand voneinander angeordnete Rollen 5,6 umläuft, von denen die Rolle 6 angetrieben ist, eine allgemein mit 7 bezeichnete Aufgabevorrichtung für so hoch erhitzten Kunststoff, daß er in viskoser bzw. breiiger Konsistenz am Aufgabeende 8 des Transportbandes 4 in einer Schicht 9 auf das Transportband 4 gelangt, einer allgemein mit 11 bezeichnete Prägeeinrichtung mit einer Kühlstrecke 12 und einer der Prägeeinrichtung 11 in einem Abstand nachgeordneten Trenneinrichtung 13.

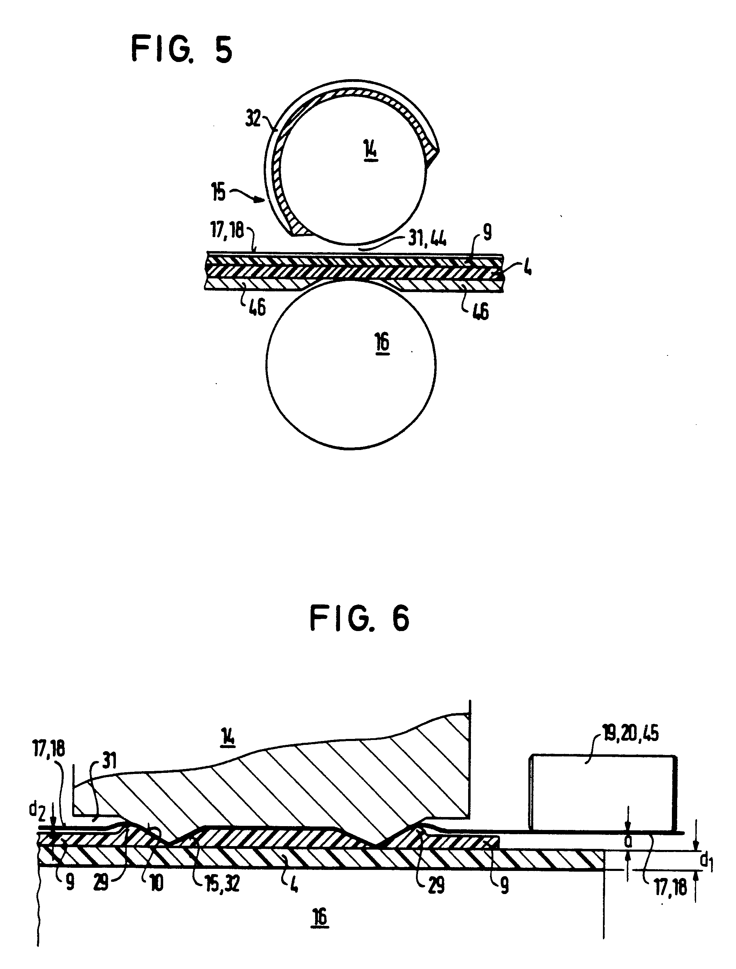

Die Prägeeinrichtung 11 besteht aus einer in einem Abstand oberhalb des Transportbandes 4 und in einem Abstand hinter der Aufgabevorrichtung 7 angeordneten, sich quer zum Transportband 4 erstreckende Prägewalze 14 mit wenigstens einer Präge-Matrize 15 an ihrem Umfang, eine unterhalb der Prägewalze 14 angeordnete Gegendruckwalze 16, auf der sich das Transportband 4 abzustützen vermag und ein sich parallel zum Transportband 4 erstreckendes und mit gleicher Geschwindigkeit umlaufendes Prägehilfsband 17, dessen Untertrum 18 zwischen der Prägewalze 14 und der Gegendruckwalze 16 verläuft. Das Prägehilfsband 17 läuft um vier Rollen 19 bis 22 um, von denen die beiden unteren Rollen 19,20 so angeordnet sind, daß das Untertrum 18 sich parallel zum Obertrum 23 des Transportbandes 4 erstreckt. Die Anordnung ist so getroffen, daß zwischen dem Untertrum 18 des Prägehilfsbandes 17 und dem Obertrum 23 des Transportbandes 4 ein Abstand a (Figur 6) besteht, der im wesentlichen gleich oder geringfügig größer ist als die Dicke d der auf dem Transportband 4 abgelegten Schicht 9 aus Kunststoff. Das Transportband 4 weist eine für Transportzwecke übliche Dicke d1 von etwa 2 bis 3mm auf. Dagegen ist die Dicke d2 des Prägehilfsbandes 17 wesentlich dünner bemessen, was sich aus der noch zu beschreibenden Funktion des Prägehilfsbandes 17 ergibt. Das Prägehilfband 17 könnte ein dünner Film sein. Beim vorliegenden Ausführungsbeispiel beträgt die Dicke d2 etwa 1mm. Das Transportband 4 und das Prägehilfsband 17 bestehen vorzugsweise aus einem kleberabweisenden, d.h. mit der Schicht 9 nicht oder nur wenig verklebenden, Material wie Silikon oder Teflon. Während das Transportband 4 eine für Transportzwecke übliche Festigkeit aufweist, bestehen an die Festigkeitseigenschaften des Prägehilfsbandes 17 besondere, noch zu beschreibende Forderungen.

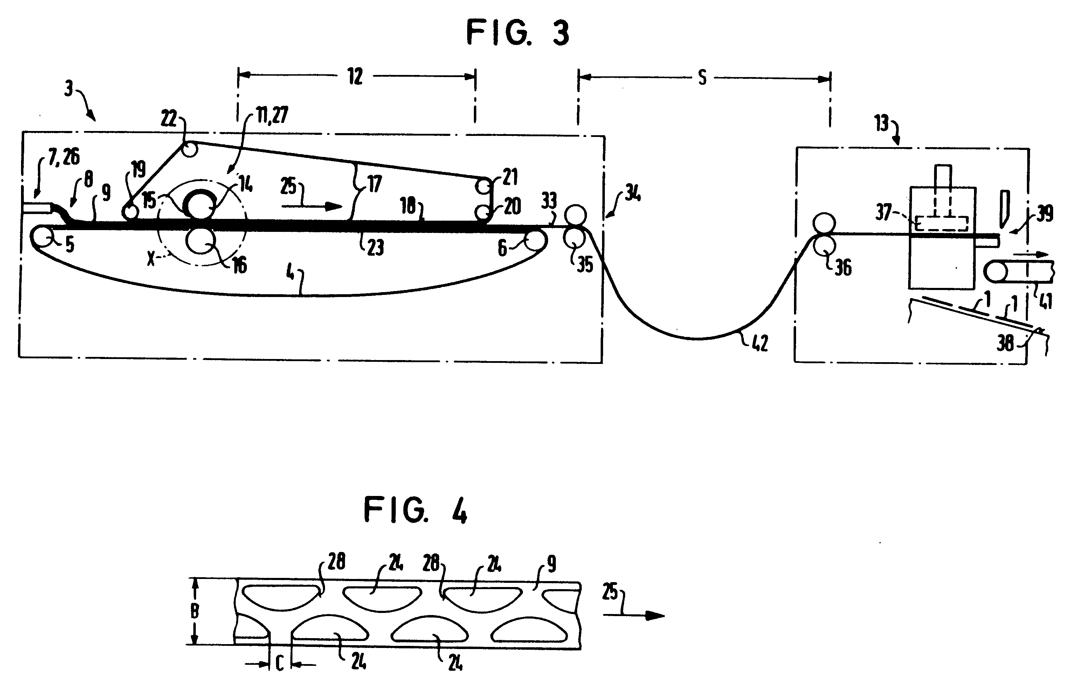

Es ist der Zweck der Vorrichtung 3, in Figur 4 allgemein mit 24 bezeichnete Prägungen in die Oberseite der Schicht 9 einzudrücken, deren Form dem keilförmig auslaufenden Kantenbereich 2 am Formteil 1 als Negativ entspricht. Wie Figur 4 deutlich zeigt, werden in die Schicht 9 Prägungen 24 in zwei nebeneinanderliegenden, längs der Durchlaufrichtung 25 gerichteten Reihen eingeprägt, wobei zwecks besserer Materialausnutzung die Prägungen 24 in Längsrichtung zueinander versetzt und so angeordnet sind, daß ihre bogenförmigen Abschnitte zueinander weisen.

Im Betrieb gelangt der Kunststoff aus einer horizontalen Schlitzdüse 26, die die Dicke d und die Breite B von etwa 25 bis 30 cm der Schicht 9 bestimmt, kontinuierlich auf das Transportband 4 wobei die Austrittsgeschwindigkeit in etwa an die Umlaufgeschwindigkeit des Transportbandes 4 angepaßt ist. Die Prägungen 24 werden beim Durchlauf der Schicht 9 zwischen dem Transportband 4 und dem Prägehilfsband 17 an der allgemein mit 27 bezeichneten Präge station mittels den Matrizen 15 eingedrückt, deren Umfangsgeschwindigkeit gleich der Umfangsgeschwindigkeit des Transportbandes des Prägehilfsbandes 17 und der Gegendruckwalze 16 ist. Beim Prägen drücken die Matrizen 15 von oben gegen das Prägehilfsband 17 und weiter in die Schicht 9 hinein, wodurch sich die Prägung 24 ergibt.

Der wesentliche Zweck des Prägehilfsbandes 17 besteht darin, den Kunststoff von der Matrize zu trennen, um eine Verklebung zu verhindern, die beim Abheben der Matrize 15 die Prägung 24 verformen oder wenigstens beeinträchtigen würde.

Bei dem Prägevorgang wird der von den Matrizen berührte Abschnitt des Prägehilfsbandes 17 mitverformt und zwar in einer der Form der Prägung 24 entsprechenden Form, so daß eine vom Prägehilfsband 17 nach unten ragende Ausformung 10 des Prägehilfsbandes 17 gebildet wird, deren Form der Prägung 24 entspricht. Diese Ausformung 10 verbleibt zunächst im Bereich der zugehörigen Prägung 24 gegebenenfalls bis zur Rolle 20, wo die Ausformung aus der Prägung 24 zum Obertrum herausgehoben wird. Das Prägehilfsband 17 kann nur diese Forderung erfüllen, wenn es wenigstens in seinem den Prägungen 24 zugeordneten Bereich plastisch also verformbar oder sehr elastisch bzw. weichelastisch ist. Die Ausformungen 10 im Prägehilfsband 17 werden im Obertrum wieder aufgehoben, so daß sie am Eingang der Prägeeinrichtung 11 nicht mehr vorhanden sind und deshalb auch nicht stören können. Hierzu dient die Spannung im Untertrum 18 des Prägehilfsbandes 17. Die Verformungen 10 sollen sich erst dann wieder auflösen, wenn der Kunststoff aufgrund Abkühlung verfestigt ist, was im Bereich der Kühlstrecke 12 erfolgt. Insbesondere in dem Fall, in dem das Prägehilfsband 17 aus dickerem Material besteht, können die Verformungen 10 auch zur Stützung der Prägungen 24 beitragen bis diese verfestigen.

Aufgrund der Prägung wird die Außenkontur des zu bildenden Formteils 1 deutlich ausgebildet, und die Prägung 24 erfolgt vorzugsweise so tief, daß zwischen dem so gebildeten Formteil 1 und dem Rest der Schicht 9 nur noch ein dünner Materialzusammenhang besteht, d.h. im Bereich der Umfangskante 28 des Formteils 1 ist eine deutliche Schwächungslinie vorhanden, aufgrund der das Formteil 1 in der nachgeordneten Trenneinrichtung 13 leicht getrennt werden kann.

Wie aus der Einzelheit ("X") gemäß Figur 4 und 5 deutlich zu erkennen ist, wird beim Prägen am äußeren Umfang Kunststoffmasse bei 29 ausgetrieben, und zwar aufgrund von Verdrängung aus dem Bereich der Prägung 24. Dies ist möglich, da am Außenumfang des Prägebereichs der Matrize Freiräume 31 vorgesehen sind, die beim vorliegenden Ausführungsbeispiel sich über den gesamten Umfang der Matrize erstrecken. Aufgrund der Flexiblität des Prägehilfsbandes 17 kann es auch diesem Materialaustrieb 29 nach oben nachgeben, ohne einen wesentlichen Druck auf den Austrieb auzuüben, der zu einer Verformung der Prägung 24 führen könnte, wenn die Matrize 15 aus der Prägung 24 herausgehoben ist.

Die mit 32 bezeichnete Prägekontur der Matrize bzw. der Matrizen 15 stellt ein Negativ der Form des Formteils 1 dar. Die Anzahl der an der Prägewalze 14 vorhandenen Matrizen 15 ist vom Abstand c zwischen den Prägungen 24, der wegen des Materialaustriebs 29 eine bestimmte Größe haben muß, und dem Durchmesser der Prägewalze 14 s_wie der Abmessung der Prägung 24 bzw. des Formteils 1 abhängig. Beim vorliegenden Ausführungsbeispiel ist an der Prägewalze 14 in der Längsebene nur eine Matrize 15 angeordnet. Es ist jedoch auch möglich, mehrere auf den Umfang verteilte Matrizen 15 anzuordnen.

Nach der Prägestation 27 wird die geprägte Schicht 9 über eine gewisse Wegstrecke auf dem Transportband 4 geführt. Diese Wegstrecke stellt eine Kühlstrecke dar, im Bereich der die geprägte Schicht 9 abkühlt wird und zwar vorzugsweise auf eine Temperatur, bei der die Klebewirkung des Kunststoffs möglichst weit verringert ist, um Verformungen der Prägung 24 zu vermeiden, d.h. bei der der Kunststoff auch verfestigt ist. Dies kann auch durch eine forcierte Kühlung mittels einer Kühlzone oder Kühlvorrichtung erreicht werden, in der als Kühlmittel Luft, Wasser oder ein sonstiges kühlendes Material dienen kann. Im Falle eines Kühlbades ist eine muldenförmige Vertiefung im Bereich der Weg- oder Kühlstrecke 12 vorzusehen, um die Schicht durch die Kühlflüssigkeit zu führen. Aufgrund der Flexibilität des Transportbandes 4 kann dieses auch einer solchen Wegführung folgen

Die geprägte Schicht 9 verläßt die Prägeeinrichtung 11 als ein durchgehendes Band 33 und gelangt zu einer Fördereinrichtung 34, die beim vorliegenden Ausführungsbeispiel durch eine Staustrecke S mit zwei Rollenpaaren 35,36 gebildet ist, zwischen denen das Band 33 bzw. die Schicht 9 verläuft. Hinter dem Rollenpaar 36 gelangt die Schicht 9 zur Trenneinrichtung 13, die beim vorliegenden Ausführungsbeispiel eine stationäre Stanze gebildet ist, jedoch auch durch eine sog. mitlaufende Stanze gebildet sein kann, bei der das Stanzwerkzeug intermittierend hubweise oder umlaufend (Walze) an der Bewegung der Schicht 9 bzw. des Bandes 33 teilnimmt.

Der Trenneinrichtung 13 ist eine nicht dargestellte Einrichtung zur Zuordnung der Schicht 9 zum allgemein mit 37 bezeichneten Stanzstempel zugeordnet, so daß dieser, dessen Stanzform der Umfangsform des Formteils 1 entspricht, letzteres genau trifft. Die ausgestanzten Formteile 1 verlassen die Trenneinrichtung 13 auf einer Rutsche 38 und können einer Sammelvorrichtung vorzugsweise in Form einer Stapelvorrichtung oder eines Behälters zugeführt werden.

Hinter der Trenneinrichtung 13 (Stanzstempel 37) ist eine Zerkleinerungsvorrichtung andeutungsweise durch eine Schneidvorrichtung 39 mit einem hin- und herbeweglichen Messer vorgesehen, in der der Reststreifen der Schicht 9 gestückelt werden kann. Das so gebildete Granulat kann mittels eines Förderers 41 der Aufgabevorrichtung 7 wieder zugeführt werden, die durch einen nicht dargestellten Extruder gebildet sein kann, in dem der Kunststoff aufbereitet, d.h. aus Granulat oder aus Komponenten zubereitet und erhitzt werden kann.

Beim vorliegenden Ausführungsbeispiel ist die Staustrecke S erforderlich, weil die Trenneinrichtung 13 ortsfest arbeitet und deshalb der Durchgang der Schicht 9 im Bereich der Trenneinrichtung 13 intermittierend ist, während er im Bereich der Prägeeinrichtung 11 kontinuierlich ist. Beim vorliegenden Ausführungsbeispiel bildet die Schicht 9 zwischen den Rollenpaaren 35,36 eine herunterhängende Schleife 42, die eine Reserve darstellt, so daß die unterschiedlichen Durchlaufbewegungen der Schicht 9 in der Prägeeinrichtung 11 und in der Trenneinrichtung 13 erfolgen können.

Aufgrund des Materialaustriebs 29 im Bereich der Matrize 15 ergibt sich nach dem Prägen eine unebene Oberfläche für die Schicht 9. Es ist deshalb dafür Sorge zu tragen, daß zwischen dieser Oberfläche 43 und der Prägewalze 14 ein gewisser Freiraum 44 besteht. Diese Problematik erfordert es auch, daß die unteren Rollen 19,20 für das Prägehilfsband 17 einen vergleichbaren Freiraum gewährleisten. Hierzu ist die Anordnung so getroffen, daß die unteren Rollen 19,20 durch verhältnismäßig kurze Rollenstücke 45 (Fig. 6) an den Rändern des Prägehilfsbandes 17 gebildet sind, so daß zwischen diesen Rollenstücken 45 das Prägehilfsband 17 nach oben auszuweichen vermag. Dies gilt insbesondere für die hintere Rolle 20, bei der aufgrund des Materialaustriebs 29 Klemmungen mit der Oberfläche 43 auftreten würden, wenn ein solcher Freiraum 44 nicht vorhanden wäre.

Zwischen den Rollen 5,6 des Transportbandes 4, d.h. zwischen letzteren und der Gegendruckwalze 16 ist ein Fördertisch 46 ausgebildet, der das Förderband 4 und somit auch die Schicht 9 unterseitig stützt und auf den das Förderband 4 gleitet. Zwischen der Prägeeinrichtung 11 und der Trenneinrichtung 13 bedarf es nicht unbedingt einer Tischauflage, da die Schicht 9 ein zusammen-hängendes Band darstellt.

## Ansprüche

1. Verfahren zum Herstellen eines flachen Formteils (1) aus einem thermoplastischen Kunststoff, das Bereiche mit unterschiedlichen Dicken (d), insbesondere keilförmig auslaufende Kantenbereiche (2) aufweist,
dadurch gekennzeichnet,
daß der Kunststoff auf eine Temperatur erhitzt wird, bei der er eine im wesentlichen viskose bzw. breiige Konsistenz aufweist,
und auf ein umlaufendes Transportband (4) in Form einer Schicht (9) kontinuierlich aufgegeben wird, daß an einer Prägestation (27) von oben der Form der Dickenunterschiede entsprechende Prägemittel (15) in die Schicht (9) eingedrückt werden, und daß nach einer Abkühlung der geprägten Schicht (9) die geprägten Abschnitte (Formteile 1) von der Schicht (9) getrennt werden.

2. Verfahren nach Anspruch 1, dadurch gekennzeichnet, daß die Prägemittel in ihrer Prägeposition in der Geschwindigkeit des Transportbandes (4) auf einer Wegstrecke (12) mitbewegt werden.

3. Verfahren nach Anspruch 1 oder 2, dadurch gekennzeichnet, daß die geprägte Schicht (9) nach der Prägestation (27) durch eine Kühlzone geführt wird.

4. Verfahren nach einem Ansprüche 1 bis 4, dadurch gekennzeichnet, daß die Schicht (9) zwischen einem Transportband (4) und einem mit der gleichen Geschwindigkeit umlaufenden Prägehilfband (17) aus im Prägebereich elastischem oder plastischem Material, vorzugsweise einem mit dem Kunststoff nicht verklebenden Material wie Silikon oder Teflon, geführt wird und an der Prägestation (27) wenigstens eine Matrize (15) von oben gegen das Prägehilfsband (17) gedrückt wird.

5. Verfahren nach einem der Ansprüche 1 bis 4, dadurch gekennzeichnet, daß das Prägemittel bzw. die Matrize (15) unmittelbar nach der Absenkung in die Prägeposition wieder vom Prägehilfsband (17) abgehoben wird.

6. Verfahren nach einem der Ansprüche 1 bis 5, dadurch gekennzeichnet, daß die Formteile (1) aus der Schicht (9) ausgestanzt werden.

7. Verfahren nach einem der Ansprüche 1 bis 6, dadurch gekennzeichnet, daß die Formteile (1) nach Abkühlung der Schicht (9), vorzugsweise hinter der Trenneinrichtung (13) auf wenigstens eine Seite mit einem Klebstoff beleimt oder beschichtet werden.

8. Verfahren nach einem der Ansprüche 1 bis 7, gekennzeichnet durch die Verwendung von Äthylenvenylacetat (ÄVA) als Kunststoff.

9. Verfahren nach einem der Ansprüche 1 bis 8, gekennzeichnet durch die Verwendung eines heißklebenden Kunststoffes.

10. Verfahren nach einem der Ansprüche 1 bis 9, dadurch gekennzeichnet, daß dem Kunststoff vor dem Austrag auf das Transportband (4) eine Komponente aus heißklebendem Material, insbesondere Kunstharz, zugemischt wird.

11. Verfahren nach einem der Ansprüche 1 bis 10, dadurch gekennzeichnet, daß wenigstens ein Teil des Abfalls der Schicht (9) zwecks Wiederverwendung dem Kunststoff vor bzw. in der Aufgabevorrichtung (7) zurückgeführt wird.

12. Vorrichtung zur Durchführung des Verfahrens nach einem der Ansprüche 1 bis 11, gekennzeichnet durch eine Aufgabevorrichtung (7) für viskosen bzw. breiigen Kunststoff am Aufgabeende (8) eines umlaufenden Transportbandes (4),
eine Prägeeinrichtung (11) hinter der Aufgabevorrichtung mit von oben gegen das Transportband beweglichen Prägeelementen (15),
eine sich am Abgabeende des Transportbandes (4) anschließende Fördereinrichtung (41) für die Schicht (9),
und eine Trenneinrichtung (13) zum Trennen der Formteile (1) von der Schicht (9).

13. Vorrichtung nach Anspruch 12, dadurch gekennzeichnet, daß zwischen dem Transportband (4) und der Matrize (15) ein mit dem Transportband (4) mit gleicher Geschwindigkeit umlaufendes Prägehilfsband (17) aus elastischem oder plastischem Material angeordnet ist.

14. Vorrichtung nach Anspruch 13, dadurch gekennzeichnet, daß die Dicke des Prägehilfsbandes (17) etwa 0,75 bis 1,5mm, vorzugsweise etwa 1 bis 1,2mm beträgt.

15. Vorrichtung nach einem der Ansprüche 12 bis 14, dadurch gekennzeichnet, daß das Transportband (4), das Prägehilfsband (17) und/oder die Matrize (15) aus mit dem Kunststoff nicht oder nur wenig verklebendem Material bestehen, wie insbesondere Teflon oder Silikon.

16. Vorrichtung nach einem der Ansprüche 12 bis 15, dadurch gekennzeichnet, daß die Matrize (15) an einer Prägewalze (14) angeordnet ist.

17. Vorrichtung nach einem der Ansprüche 12 bis 16, dadurch gekennzeichnet, daß hinter der Prägestation (27) eine Kühlstrecke (12) bzw. Kühlzone angeordnet ist.

18. Vorrichtung nach einem der Ansprüche 12 bis 17, dadurch gekennzeichnet, daß die Trenneinrichtung (13) durch eine Stanze gebildet ist.

19. Vorrichtung nach einem der Ansprüche 12 bis 18, dadurch gekennzeichnet, daß zwischen der Prägeeinrichtung (11) und der Trenneinrichtung (13) eine Staustrecke (S) angeordnet ist.

20. Formteil (1) bestehend aus einem flachen thermoplastischen Material mit heißklebendem Zusatz, das Bereiche unterschiedlicher Dicke, insbesondere keilförmig bzw. spitz auslaufende Randbereiche (2) hat und vorzugsweise für die Herstellung von Hinter-oder Vorderkappen in der Schuhherstellung Verwendung findet; dadurch gekennzeichnet, daß das Formetil (1) ausschließlich aus dem genannten Material besteht.

# FIG. 2

# FIG. 1

## FIG. 3

## FIG. 4

EP 0 300 435 A2

# FIG. 5

# FIG. 6